# EUROPÄISCHE PATENTSCHRIFT

(11) **EP 0 433 859 B1**
(45) Veröffentlichungstag und Bekanntmachung des Hinweises auf die Patenterteilung: **28.09.1994**
(21) Anmeldenummer: 90123873.3
(22) Anmeldetag: 12.12.1990
(51) Int. Cl.: G02B 6/10, H01S 3/16

(54) **Optisches Bauelement und Verfahren zu dessen Herstellung**
Optical element and method for its production
Elément optique et son procédé de fabrication

(30) Priorität: 18.12.1989 DE 3941704; 11.07.1990 DE 4022090
(43) Veröffentlichungstag der Anmeldung: 26.06.1991
(73) Patentinhaber: FORSCHUNGSZENTRUM JÜLICH GMBH, 52425 Jülich (DE)
(72) Erfinder: Buchal, Christoph, Dr., W-5170 Jülich (DE); Sohler, Wolfgang, Dr., W-4790 Paderborn (DE)

(56) Entgegenhaltungen:
- ELECTRONICS LETTERS, Band 25, Nr. 15, 20. Juli 1989 P.J. CHANDLER et al. "Ion-Inplanted Nd : YAG Planar Waveguide Laser" Seiten 985-986
- APPLIED PHYSICS LETTERS, Band 36, Nr. 9, 1. Mai 1980 S. SRIRAM et al. "Distributed-feedback dye laser integrated with a channel waveguide formed on silicon" Seiten 721-723
- OPTICS AND SPECTROSCOPY (USSR), Band 59, Nr. 4, Oktober 1985,1986, The Optical Society of America ; A.V. ASTAKHOV et al. "Characteristics of laser effects in active fiber lightguides" Seiten 551-553
- INTEGRATED OPTICS : THEORY AND TECHNOLOGY, R. Hunsperger, Springer-Verlag 1982.
- APPLIED OPTICS, R. Standley, vol. 11, no. 6, 1972.
- SPIE, vol. 1128, Glasses for Optoelectronics, 1989, Seiten 142-144.

## Beschreibung

Die Erfindung bezieht sich auf ein Verfahren zur Herstellung eines optischen Bauelementes, bei dem ein räumlich beschränkter, als optischer Wellenleiter vorgesehener Bereich eines Substrats aus dielektrischem Material zusätzlich mit Ionen durch Implantation dotiert wird. Die Erfindung bezieht sich ferner auf ein optisches Bauelement hergestellt nach einem solchen Verfahren.

Man kann Licht in optischen Materialien (Kristalle, Gläser) gebündelt transportieren. Der Kanal für Licht heißt optischer Wellenleiter. Wellenleiter sind in der Literatur beschrieben und werden im allgemeinen durch Eindiffusion von Metallionen oder durch Ionenaustausch hergestellt. Kanäle werden dabei durch lithographische Masken definiert, ähnlich wie in der Mikroelektronik Leiterbahnen oder lokale Dotierungen hergestellt werden. Sinn eines Wellenleiters ist es, Licht möglichst ohne Verluste und ohne Abstrahlung von einem Bauteil zu einem anderen zu führen oder es in seiner gebündelten Intensität zu beeinflussen, z.B. zu modulieren oder abzuschwächen.

Wenn Licht mit bestimmten Atomen (Ionen) wechselwirkt, können diese Ionen die Intensität des Lichtes durch induzierte Emission verstärken (Licht-Verstärker). Besonders ausgeprägt ist dieser Effekt, wenn die Verstärkung in einem durch Reflektoren begrenzten Resonator stattfindet. Auf diesem Prinzip beruht der Laser. Die zur Verstärkung notwendige Energie wird entweder optisch zugeführt (optisches Pumpen) oder kann bei Halbleiterlasern auch elektrisch zur Verfügung gestellt werden.

Ein derartiges Verfahren ist aus Electronics-Letters 25, p. 985-986 (Juli 1989) bekannt. Danach wird einem gleichförmig dotierten Nd: YAG-Kristall mit Hilfe von He-Implantation ein zusätzlicher Wellenleiter aufgeprägt, der einen Lasereffekt zeigt.

Einer Arbeit von Lallier, Pocholle, Papuchon, Grezes-Besset, Pelletier, de Micheli, Li, He und Ostrowsky (Konferenzbeitrag bei der IOOC, Integr. Optics and Optical Communicatin, Kobe, Japan, July 1989) ist ferner zu entnehmen, daß einem Nd:MgO:LiNbO₃-Kristall mit Hilfe des Protonenaustausches ein Wellenleiter aufgeprägt wurde. Auch in diesem Falle wurde ein Lasereffekt beobachtet.

Die bekannten Verfahren zur Erzeugung eines zusätzlichen Wellenleiters beschränken sich somit auf leichte Dotierungs-Ionen wie He und Protonen.

Wenn man die für die Licht-Emission verantwortlichen Ionen in einen optischen Wellenleiter einbringt, kann man gezielt Intensität verstärken oder einen Laser im Wellenleiter konstruieren.

Die Benutzung von Seltenen-Erd-Ionen (z.B. Nd:YAG) oder Übergangsmetall-Ionen (z.B. Ti:Al₂O₃) als Dotierungs-Ionen zur Herstellung von Festkörperlasern ist bekannt. Ihr Einsatz beschränkt sich jedoch darauf, daß die dielektrischen Kristalle oder Gläser in der Schmelze dotiert werden und somit der gesamte Kristall bzw. das Glas mehr oder minder gleichmäßig dotiert ist.

Bei derart gleichmäßig dotierten "Laserkristallen" ist es außerordentlich ungünstig, daß auf diesem dotierten Substrat weitere Bauelemente der Wellenleiteroptik wie etwa Modulatoren, Lichtkoppler und Strahlweichen nicht optimal untergebracht werden können, weil in diesen Bauteilen die Laserionen unerwünscht Absorption oder Streuung hervorrufen können. Außerdem sind unterschiedlich dotierte Strukturen nicht möglich.

Aus einer Reihe von Gründen wäre es vorteilhaft, wenn nicht ein großes Kristallstück für die Verstärker-und Laserwirkung eingesetzt wird, sondern das Licht auf einen optischen Wellenleiter begrenzt wird, der in den seitlichen Dimensionen vergleichbar ist mit der Ausdehnung des anzukoppelnden Lichtleiters, so daß das Licht leichter in eine Lichtfaser eingekoppelt werden kann. Als Vorteile eines solchen Bauelementes sind zu nennen:
1. Wesentliche Reduzierung der optischen Pumpleistung
2. Leichtere Beeinflußbarkeit der Felder in der Cavity für Mode-Locking oder Q-Switching
3. Ausnutzung von nichtlinearen Eigenschaften für Second-Harmonic-Generation Differenzfrequenzbildung oder Summenfrequenzbildung
4. Günstige Voraussetzungen für die Ankopplung eines optischen Lichtleiters

Es ist daher Aufgabe der Erfindung, ein Verfahren zur Herstellung eines Bauelementes der eingangs bezeichneten Art zu schaffen, das es ermöglicht, einen zusätzlichen, als optischen Wellenleiter fungierenden Bereich des Substrats mit Laserionen zu dotieren. Es ist ferner Aufgabe der Erfindung, ein Bauelement zu schaffen, das den Lasereffekt ermöglichende optische Wellenleiter aufweist und das im weiteren Ausbau die Integration mehrerer optischer Bauelemente zusammen mit einem oder mehreren Lasern auf einem gemeinsamen Substrat in optimaler Weise ermöglicht.

Diese Aufgabe wird erfindungsgemäß durch ein Verfahren nach Anspruch 1 gelöst. Hierbei werden als Dotierungs-Ionen Seltene-Erd-Ionen oder Ionen eines Übergangsmetalls durch Implantation mit Energien von 50 keV - 10 MeV in den Bereich des Wellenleiters eingebracht. Die Ionen werden dazu mit einem Ionenbeschleuniger in den Wellenleiterbereich implantiert, wobei die Laserionen in ausreichender Konzentration bis in eine hinreichende Tiefe unterhalb der Oberfläche eingebracht werden können. Durch Anwendung der Diffusion der Ionen allein kann dies dagegen nicht erreicht werden.

Mit Hilfe lithographisch strukturierter Masken läßt sich die Dotierung lateral begrenzen. Durch den Implantationsprozeß selbst ist die Dotierung in der Tiefe begrenzt.

Wird die Ionen-Implantation bei Substrattemperaturen im Bereich von 300 K bis 800 K durchgeführt, dann heilt schon während der Implantation ein Teil des Gitterschadens wieder aus. Im Falle von Seltenen-Erd-Ionen findet eine Diffusion in die Tiefe des Substrat nicht statt, so daß die Tiefe der Dotierung direkt durch die Implantationsenergie bestimmt ist.

Eine alternative Verfahrensweise besteht darin, daß die Ionen-Implantation bei Substrat-Temperaturen im Bereich von 77 K bis 300 K durchgeführt werden. In diesem Falle heilt der Gitterschaden während der Implantation nicht aus. Insbesondere nach dieser alternativen Verfahrensweise führt eine nachträgliche Temperung des Substrats bei Temperaturen von 800 K bis 1800 K dazu, daß während der Wärmebehandlung eine deutliche Diffusion der Dotierungs-Ionen stattfindet.

Der nach der Implantation verbleibende Gitterschaden kann auch durch Festkörperepitaxie ausgeheilt werden.

Eine weitere Verfahrensvariante besteht darin, daß zusätzliche leichte Ionen, wie H, He oder O, in den für den Wellenleiter vorgesehenen Bereich des Substrats implantiert werden. Hierdurch werden Gitterschäden in größerer Tiefe erzeugt und damit eine Diffusion der Dotierungs-Ionen in größere Tiefe ermöglicht ("Strahlenschaden - verstärkte Diffusion").

Eine besonders vorteilhafte Verfahrensweise gemäß der Erfindung besteht darin, daß räumlich unterschiedlichen Bereiche des Substrats zur Erzeugung räumlich voneinander getrennter optischer Wellenleiter mit Ionen dotiert werden. Die räumlich unterschiedlichen Bereiche können dabei auch in unterschiedlicher Konzentration oder mit unterschiedlichen Ionen dotiert werden. Dies bedeutet, daß in demselben, bevorzugt undotierten Mutterkristall (z.B.: ein LiNbO₃-Wafer oder ein optisches Glas) an verschiedenen Orten unterschiedliche Laserionendotierungen vorgenommen werden, so daß Laser oder Verstärker verschiedener Wellenlängen und unterschiedlicher Konstruktionen (Gitterspiegel, Gitterresonatoren, Oberflächenspiegel, gekoppelte Wellenleiter, intracavity modulierte Laser) auf demselben Chip integriert werden können, zusammen mit weiteren Bauelementen.

Diese günstige Kombination verschiedenartiger Laser-Dotierungsionen, gegebenenfalls mit unterschiedlichen Konzentrationen, läßt sich nicht mit den sonst üblichen Diffusionsdotierungen erreichen, weil die für den Lasereffekt notwendigen Ionen, insbesondere die Seltene-Erd-Ionen, zu große Atomdurchmesser besitzen und sich häufig nicht durch Diffusion eintreiben lassen.

Die Aufgabe gemäß der Erfindung wird somit durch ein Verfahren nach Anspruch 1 gelöst, wobei in die räumlich beschränkten Bereiche (die optischen Wellenleiter) als Dotierungs-Ionen Seltene-Erd-Ionen oder Ionen von Übergangsmetallen implantiert werden.

Eine sehr vorteilhafte Ausführungsform des Bauelementes hergestellt gemäß der Erfindung besteht dabei darin, daß das Substrat räumlich voneinander getrennte, Dotierungs-Ionen enthaltende Bereiche (Wellenleiter) aufweist. Die Ausführungsform erlaubt den Bau von integriert-optischen Festkörper-Lasern oder Lichtverstärkern. Dabei können die räumlich voneinander getrennten Bereiche auch unterschiedliche Dotierungs-Ionen bzw. Ionen in unterschiedlicher Konzentration enthalten.

Ausführungsformen der Bauelemente gemäß der Erfindung werden in der Zeichnung schematisch dargestellt und im folgenden näher erläutert:

Es zeigen
- Figur 1: einen homogen dotierten Laserstab bekannter Art
- Figur 2: einen homogen dotierten Laserstab mit zusätzlichem Wellenleiter an einer Oberfläche
- Figur 3: einen Streifenwellenleiter in einem optischen Kristall mit einer Laserdotierung nur im Bereich des Wellenleiters
- Figur 4: ein integrierter optischer Verstärker und 2 Laser mit externen Modulatoren für 3 Frequenzen

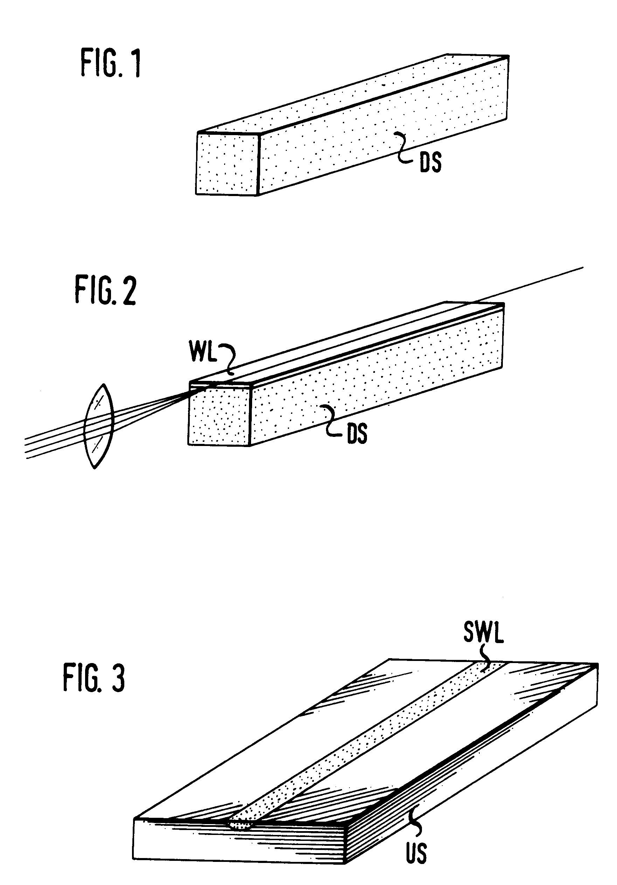

In Figur 1 ist ein homogen dotiertes Substrat DS (Laserstab) bekannter Art dargestellt. Dieses Bauelement besteht beispielsweise aus einem YAG-Kristall, der mit Nd-Ionen dotiert ist. Derartige Bauelemente werden in der Schmelze dotiert.

Beim Laserstab gemäß Figur 2 handelt es sich um ein Bauelement, wie in der zitierten Literatur beschrieben. Das Substrat DS ist homogen dotiert und zusätzlich ist ein Wellenleiter WL an einer Oberfläche aufgebracht. Bei dem Substrat DS kann es sich um dasselbe Material wie in Fig. 1 handeln.

Bei dem in Figur 3 dargestellten Bauelement handelt es sich beispielsweise um einen LiNbO₃-Kristall (undodiertes Substrat US) mit einem mit Er-Ionen dotierten Streifenwellenleiter SWL. Ein solches Bauelement wird beispielsweise erfindungsgemäß wie folgt hergestellt:
1. In den LNbO₃-Kristall (Substrat) werden unter lateraler Begrenzung durch Ti-Masken (lithographisch; 1 »m Dicke) Er-Ionen mit 200 keV mit einer Dotierung von 10¹⁶ Er/cm² implantiert. Die Er-Ionen erreichen eine Tiefe von 70 - 80 nm. Die Ti-Maske wird mittels 5 %iger HF-Säure abgeätzt.
2. Die Probe wird bei 1050 C° in trockener Luft 13 Stunden getempert, wonach die Er-Ionen eine Tiefe von 1,5 - 2 »m erreichen.
3. Der Streifenwellenleiter wird in bekannter Weise durch
   a) Ti-Enddiffusion,
   b) Protonen-Austausch oder
   c) Ti-Implantation
   erzeugt.

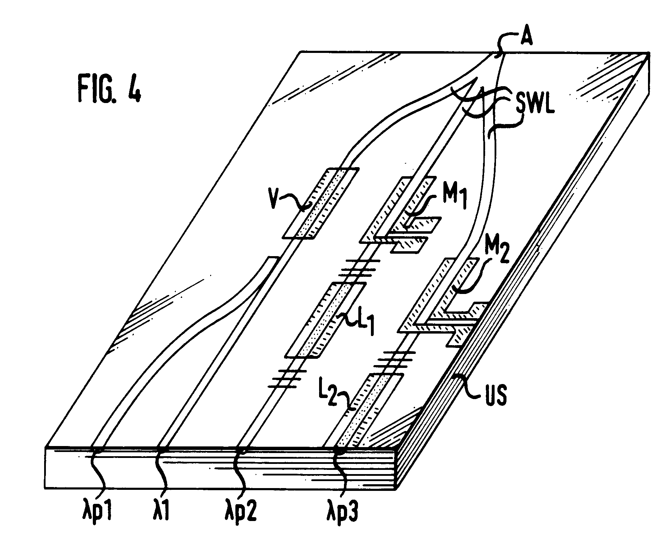

Bei dem in Figur 4 dargestellten Bauelement befinden sich mehrere Streifenwellenleiter SWL auf einem undotierten Substrat US, beispielsweise einem Kristall aus LiNbO₃. Der mit laseraktiven Ionen dotierte Bereich L1 des Streifenwellenleiters SWL ist ein Laser mit zwei Gitterspiegeln, der ebenfalls mit laseraktiven Ionen dotierte Bereich L2 ist ein Laser mit einem Gitterspiegel und einem Endflächenspiegel. Der dotierte Bereich V des optischen Wellenleiters SWL ist ein optischer Verstärker. Pumplicht wird bei den Pumplichteingängen λp1, λp2 und λp3 eingespeist. λ1 ist ein Lichtsignaleingang. M1 und M2 sind elektro-optische Modulatoren. A ist der gemeinsame Ausgang aller Signale. In diesem integriert-optischen Chip sind zusätzlich zu den bekannten Verfahren der Herstellung von integriert-optischen Bauelementen die Laser- oder Verstärkerbereiche V, L1 und L2 mit Hilfe der Ionenimplantation mit laseraktiven Ionen dotiert.

## Patentansprüche

1. Verfahren zur Herstellung eines Wellenleiter-Verstärkers, der in einem räumlich beschränkten Bereich eines optischen Wellenleiters in einem Substrat aus dielektrischem Material als Dotierungsionen Seltene-Erd-Ionen oder Ionen eines Übergangsmetalls zur Verstärkung von im Wellenleiter geführten Lichts aufweist,
**dadurch gekennzeichnet**,
daß die Dotierungsionen durch Implantation mit Energien von 50 keV - 10 MeV eingebracht werden.

2. Verfahren nach Anspruch 1,
**dadurch gekennzeichnet**,
daß das Substrat ein LiNbO₃-Kristall ist.

3. Verfahren nach Anspruch 1 oder 2,
**dadurch gekennzeichnet**,
daß zur Dotierung des räumlich beschränkten Bereiches des optischen Wellenleiters (SWL) Masken eingesetzt werden.

4. Verfahren nach Anspruch 1, 2 oder 3,
**dadurch gekennzeichnet**,
daß die Ionen-Implantation bei Substrat-Temperaturen im Bereich von 300 K bis 800 K durchgeführt wird.

5. Verfahren nach einem der Ansprüche 1, 2 oder 3,
**dadurch gekennzeichnet**,
daß die Ionen-Implantation bei Substrat-Temperaturen im Bereich von 77 K bis 300 K durchgeführt wird.

6. Verfahren nach Anspruch 5,
**dadurch gekennzeichnet**,
daß der durch die Ionen-Implantation im Substrat (US) entstandene Gitterschaden durch Temperierung des Substrats bei einer Temperatur von 800 K bis 1800 K ausgeheilt wird.

7. Verfahren nach einem der vorhergehenden Ansprüche,
**dadurch gekennzeichnet**,
daß zusätzlich leichte Ionen, wie H, He oder O, in den räumlich beschränkten Bereich des Wellenleiters implantiert werden.

8. Verfahren nach einem der vorhergehenden Ansprüche,
**dadurch gekennzeichnet**,
daß unterschiedliche, räumlich beschränkte Bereiche des Substrats (US) zur Erzeugung räumlich voneinander getrennter Wellenleiter-Verstärker (V, L1, L2) mit Ionen dotiert werden.

9. Verfahren nach Anspruch 8,
**dadurch gekennzeichnet,**
daß die unterschiedlichen, räumlich beschränkten Bereiche mit unterschiedlichen Ionen dotiert werden.

## Claims

1. Process for the production of a waveguide-amplifier which in a spatially restricted region of an optical waveguide in a substrate made of dielectric material has as doping ions rare-earth ions or ions of a transition metal for the amplification of light conducted in the waveguide, characterised in that the doping ions are introduced by implantation with energies of 50 keV - 10 MeV.

2. Process according to claim 1, characterised in that the substrate is an LiNbO₃ crystal.

3. Process according to claim 1 or 2, characterised in that masks are used for the doping of the spatially restricted region of the optical waveguide (SWL).

4. Process according to claim 1, 2 or 3, characterised in that the ion implantation is carried out at substrate temperatures in the region of 300 K to 800 K.

5. Process according to one of claims 1, 2 or 3, characterised in that the ion implantation is carried out at substrate temperatures in the region of 77 K to 300 K.

6. Process according to claim 5, characterised in that the lattice damage caused by the ion implantation in the substrate (US) is healed by tempering of the substrate at a temperature of 800 K to 1800 K.

7. Process according to one of the preceding claims, characterised in that ions of a light type such as H, He or O are additionally implanted in the spatially restricted region of the waveguide.

8. Process according to one of the preceding claims, characterised in that differing spatially restricted regions of the substrate (US) are doped with ions for the production of waveguide-amplifiers (V, L1, L2) which are spatially separate from one another.

9. Process according to claim 8, characterised in that the differing spatially restricted regions are doped with differing ions.

## Revendications

1. Procédé pour fabriquer un amplificateur de guide d'ondes, qui comporte, dans une zone limitée dans l'espace du guide d'ondes optiques, dans un substrat en un matériau diélectrique, en tant qu'ions de dopage, des ions de terres rares ou des ions d'un métal de transition destinés à amplifier la lumière guidée dans le guide d'ondes, caractérisé par le fait que les ions de dopage sont introduits par implantation avec des énergies de 50 keV à 10 MeV.

2. Procédé suivant la revendication 1, caractérisé par le fait que le substrat est un cirstal de LiNbO₃.

3. Procédé suivant la revendication 1 ou 2, caractérisé par le fait que pour le dopage de la région, limitée dans l'espace, du guide d'ondes optiques (SWL), on utilise des masques.

4. Procédé suivant la revendication 1, 2 ou 3, caractérisé par le fait que l'implantation ionique est effectuée à des températures du substrat dans l'intervalle de 300 K à 800 K.

5. Procédé suivant l'une des revendications 1, 2 ou 3, caractérisé par le fait que l'implantation ionique est effectuée à des températures du substrat dans l'intervalle de 77 K à 300 K.

6. Procédé suivant la revendication 5, caractérisé par le fait que le défaut du réseau, qui apparaît sous l'effet de l'implantation ionique dans le substrat (US), est soumis à un recuit sous l'effet de la mise en température du substrat à une température de 800 K à 1800 K.

7. Procédé suivant l'une des revendications précédentes, caractérisé par le fait qu'on implante en supplément des ions légers, tels que H, He ou O, dans la zone limitée dans l'espace du guide d'ondes.

8. Procédé suivant l'une des revendications précédentes, caractérisé par le fait qu'on dope, avec des ions, différentes zones, limitées dans l'espace, du substrat (US) pour produire des amplificateurs de guides d'ondes (V, L1, L2) séparés dans l'espace les uns des autres.

9. Procédé suivant la revendication 8, caractérisé par le fait que les différentes zones limitées dans l'espace sont dopées par des ions différents.
